# Europäisches Patentamt
# European Patent Office
# Office européen des brevets

(19)

(11) Veröffentlichungsnummer: **0 085 943**
**B1**

(12) **EUROPÄISCHE PATENTSCHRIFT**

(45) Veröffentlichungstag der Patentschrift:
14.12.88

(51) Int. Cl.⁴: **G 06 F 13/36**, H 04 L 11/16

(21) Anmeldenummer: **83100963.2**

(22) Anmeldetag: **02.02.83**

(54) Verfahren zur Steuerung des Zugriffs von Teilnehmerstationen einer Datenübertragungseinrichtung zu Busleitungen.

(30) Priorität: 09.02.82 DE 3204427

(43) Veröffentlichungstag der Anmeldung:
17.08.83 Patentblatt 83/33

(45) Bekanntmachung des Hinweises auf die Patenterteilung:
14.12.88 Patentblatt 88/50

(84) Benannte Vertragsstaaten:
AT BE CH DE FR GB LI NL

(56) Entgegenhaltungen:
EP-A-0 035 731
GB-A-2 060 229
GB-A-2 060 960
US-A-3 710 351

(73) Patentinhaber: **Siemens Aktiengesellschaft Berlin und München, Wittelsbacherplatz 2, D-8000 München 2 (DE)**

(72) Erfinder: **Janetzky, Dittmar, Dipl.- Ing., Liedolsheimer Ring 26, D-7500 Karlsruhe (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 085 943 B1

## Beschreibung

Die Erfindung bezieht sich auf ein Verfahren zur Steuerung des Zugriffs von Teilnehmerstationen einer dezentralisierten Datenübertragungseinrichtung zu Busleitungen, bei dem der Buszugriff von jeder Teilnehmerstation über eine ihr zugeordnete Adresse erfolgt und die Teilnehmerstationen mit einer gemeinsamen Busleitung verbindbar sind, über die Signale seriell übertragen werden.

Bei einem bekannten Verfahren dieser Art (DE-OS-3 009 308 = EP-A-0 035 731) werden jeweils eine Gruppe von Teilnehmerstationen in einem örtlich zusammenhängenden Nahbereich an eine Nahbusleitung angeschlossen; diese Gruppen von Teilnehmereinrichtungen sind wiederum über besondere Koppeleinrichtungen an eine gemeinsame Busleitung (Fernbus) angeschlossen. Der Buszugriff der Teilnehmerstationen vor einem Datenaustausch zwischen zwei Teilnehmerstationen erfolgt bei diesem bekannten Verfahren somit zunächst über den Fernbus und anschließend über den Nahbus. Diese Zugriffsschritte, besonders bei der Anwahl der in Frage kommenden Teilnehmerstation aus der Gruppe von Teilnehmerstationen am Nahbus, machen besondere Einrichtungen zur Erkennung der jeweiligen Teilnehmerstation erforderlich, wodurch unter Umständen höhere Zugriffszeiten erforderlich sind. Dabei werden die Teilnehmerstationen, welche die Master-Funktion übernehmen wollen, nach einem Synchronisationsschritt aufgefordert das höchstwertige Bit ihrer Adresse aufzuschalten. Das führt dazu, daß jene Teilnehmerstationen, deren höchstwertiges Bit einen anderen logischen Wert hat als das Signal auf der Datenleitung, in dem nächsten Zeitabschnitt ausscheiden. Nach einer bestimmten Zahl von Zeitabschnitten, die alle gleich lange dauern, stimmt schließlich das Signal auf der Datenleitung mit dem von der Station mit der höchsten Adresse abgegebenes Signal überein.

Weiterhin ist aus der EP-A-0 035 731 ein Verfahren zur Übernahme der Steuerung der Datenübertragung bei einem zentralisierten Datenübertragungssystem bekannt. Hierbei wird von einer zentralen Steuereinheit mittels eines Aufruftelegramms die Abfrage nach einem gewünschten Zugriff auf den gemeinsamen Bus gestartet. Der Zugriff erfolgt durch Selektion der Teilnehmer mit den jeweils höchstwertigen Bits.

Der vorliegenden Erfindung liegt die Aufgabe zugrunde, ein Verfahren zur Steuerung des Zugriffs zu Teilnehmerstationen einer dezentralisierten Datenübertragungseinrichtung zu schaffen, bei dem der gerätetechnische Aufwand und die Zeit für die Zugriffsentscheidung vermindert werden.

Diese Aufgabe wird erfindungsgemäß dadurch gelöst, daß alle Teilnehmerstationen direkt an die gemeinsame Busleitung angekoppelt sind und daß jede Teilnehmerstation mit einer von ihrer örtlichen Lage abhängigen Adresse an der Steuerung und der Entscheidung über den Zugriff teilnimmt, wobei die binären Zustände des ersten Bits der seriell codierten Adresse jeweils eine halbe Länge der an der Zugriffsentscheidung teilnehmenden Busleitung als größte Schrittweite kennzeichnen und das jeweils nachfolgende Bit der Adresse einer gegenüber der vorhergehenden Schrittweite halbierten Schrittweite auf der Busleitung zugeordnet ist sowie das letzte Bit der seriellen Adresse die kleinste Schrittweite, d. h. den einer Teilnehmerstation zugeordneten Abschnitt der Busleitung, kennzeichnet.

Beim erfindungsgemäßen Verfahren erfolgt der Zugriff in vorteilhafter Weise über den Teilnehmerstationen zugeordnete Adressen, die so gebildet sind, daß die binäre Zusammensetzung dieser Adressen der örtlichen Lage der jeweiligen Teilnehmerstation an der gemeinsamen Busleitung entspricht. Die binären Signale der jeweils den Zugriff anfordernden Teilnehmerstation werden zur Realisierung der Zugriffsentscheidung seriell auf die gemeinsame Busleitung gegeben, so daß nach dem ersten Bit bereits eine Entscheidung über den Standort dieser Teilnehmerstation innerhalb jeweils der halben Länge der Busleitung, auf der diese Teilnehmerstation gesucht wird, getroffen ist; nach jedem weiteren seriell übertragenen Bit erfolgt eine Einengung um abermals die Hälfte, so daß nach der Übertragung des letzten Bits der kleinste Abschnitt der Busleitung gefunden ist, an dem sich die gewünschte Teilnehmerstation befindet. Dadurch, daß bei jedem Entscheidungsschritt auch die einzelnen Taktzeiten bei der Übertragung der jeweiligen Adresse festgelegt sind, d. h. sich auch ausgehend von einer längsten Taktzeit zur Einengung des Zugriffsbereichs auf die halbe Länge der Busleitung weiter halbieren, ist unabhängig vom Ort der Teilnehmerstation eine stets gleiche Summe der einzelnen Taktzeit gegeben und somit eine optimale Zugriffszeit gewährleistet. Falls innerhalb des jeweils kleinsten Abschnitts noch weitere Teilnehmerstationen angeordnet sind, kann eine weitere Selektierung dieser Stationen mit Erkennungsbits in üblicher Weise nunmehr gleichbleibender Taktzeiten erfolgen. Das gleiche kann auch zur Anwahl eventuell weiterer Busleitungen, dann allerdings mit der längsten Taktzeit, vorgenommen werden.

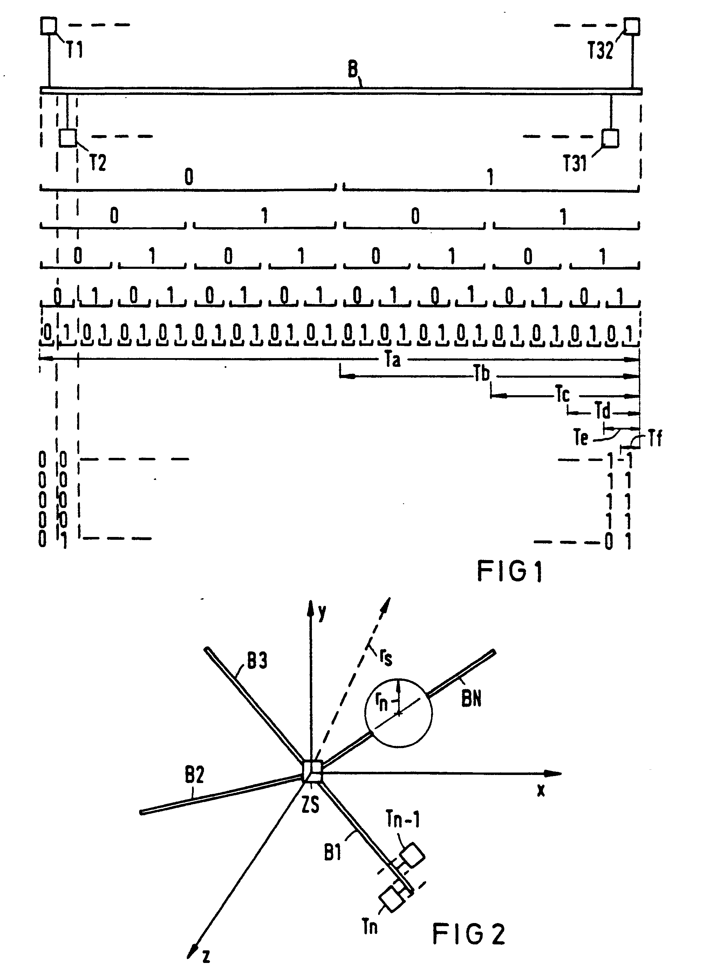

Die Erfindung wird anhand der Figuren erläutert, wobei Figur 1 eine Prinzipdarstellung einer Datenübertragungseinrichtung, mit der das erfindungsgemäße Verfahren durchgeführt werden kann, sowie die Zusammensetzung der Adressen der Teilnehmerstation zeigt und

Figur 2 eine Anordnung zur Anwendung des erfindungsgemäßen Verfahrens bei räumlich verteilten Teilnehmerstationen darstellt.

In der Figur 1 ist eine Busleitung B dargestellt, an die Teilnehmerstationen T1 ... T32 in gleichen Abständen angekoppelt sind. Die Adressen der Teilnehmerstationen T1 ... T32 sind, wie den

2

unterhalb der Busleitung dargestellten Diagrammen zu entnehmen, aufgebaut. Die jeweiligen Adressen der Teilnehmerstationen werden über ein serielles 5-Bit-Signal übertragen, von denen das erste Bit a bei diesem Ausführungsbeispiel im Bereich der ersten Hälfte der Busleitung B "0" ist und im Bereich der zweiten Hälfte der Busleitung B "1" ist. Die nachfolgenden Bits b, c, d und e weisen wiederum eine Unterteilung nach den beiden binären Zuständen "0" und "1" des jeweils vorhergehenden Abschnitts der Busleitung auf. Mit der Übertragung des letzten seriellen Bits e ist somit die Entscheidung über den Buszugriff einer Teilnehmerstation an dem durch die erfindungsgemäße Adressierung bestimmten Ort der Busleitung erfolgt. Im unteren Teil des Diagramms in der Figur 1 sind die binären Adressen für die Teilnehmerstationen T1, T2 bzw. T31 und T32 aufgeführt. Ferner sind in dem Diagramm nach der Figur 1 die erforderlichen Taktzykluszeiten Ta, Tb, Tc, Td, Te und Tf aufgeführt, die zur Übertragung eines Adressensignals und zum Zugriff zu einer gewünschten Teilnehmerstation notwendig sind.

Die Zugriffszeit Tz für eine Teilnehmerstation ergibt sich somit durch

$$Tz = k \cdot \tau L$$

wobei k eine durch den Aufbau der Datenübertragungseinrichtung bedingte Konstante ist und beispielsweise in der Größenordnung von 4 liegen kann und $\tau L$ sich durch folgende Gleichung darstellen läßt:

$$\tau L = (Ta + Tb + Tc + Td + Te + Tf)$$

$$\text{bzw. } \tau L = (Ta + \frac{T}{2} + \frac{T}{4} + \frac{T}{8} + \frac{T}{16} + \frac{T}{32})$$

Das erfindungsgemäße Verfahren läßt sich auch bei einer Mehrzahl von Busleitungen B1, B2, B3 ... Bn anwenden, die in einem Raum mit den Koordinaten X, Y und Z in einem Radius $r_s$, wie in der Figur 2 dargestellt verteilt sind. Die Busleitungen B1 ... Bn können hier z. B. aus Infrarot-Übertragungsstrecken bestehen; die Teilnehmerstationen Tn bzw. Tn-1 sind hierbei mit entsprechenden Empfangs- und Sendeeinrichtungen ausgestattet, so daß ein Zugriff beispielsweise auch von einer Zugriffsteuerungseinrichtung ZS im Mittelpunkt des durch den Radius $r_s$ definierten Raumes möglich ist. Die Entscheidung, zu welcher der Busleitungen im Raum ein Zugriff erfolgen soll, kann hier durch der eigentlichen Adresse vorangestellte Erkennungsbits erfolgen. Der Raumabschnitt, der durch eine wie anhand der Figur 1 beschrieben aufgebaute Adresse gekennzeichnet ist und somit die Lage einer Teilnehmerstation definiert, ist hier mit dem Radius $r_n$ gekennzeichnet.

## Patentanspruch

1. Verfahren zur Steuerung des Zugriffs von Teilnehmerstationen einer dezentralisierten Datenübertragungseinrichtung zu Busleitungen, bei dem

a) der Buszugriff jeder Teilnehmerstation, der sich um die Übernahme der Masters-Funktion bemüht, über eine ihr zugeordnete Adresse erfolgt, mit dem höchstwertigen Bit zuerst, und

b) die Teilnehmerstationen mit einer gemeinsamen Busleitung verbindbar sind, über die Signale seriell übertragen werden, <u>dadurch gekennzeichnet</u>, daß

c) alle Teilnehmerstationen (T1 ... T32) direkt an die gemeinsame Busleitung (B) angekoppelt sind und daß

d) jede Teilnehmerstation (T1 ... T32) mit einer von ihrer örtlichen Lage abhängigen Adresse an der Steuerung und der Entscheidung über den Zugriff teilnimmt, wobei

d1) die binären Zustände des ersten Bits der seriell codierten Adresse jeweils eine halbe Länge der an der Zugriffsentscheidung teilnehmenden Busleitung (B) als größte Schrittweite kennzeichnen und

d2) das jeweils nachfolgende Bit der Adresse einer gegenüber der vorhergehenden Schrittweite halbierten Schrittweite auf der Busleitung (B) zugeordnet ist,

d3) das letzte Bit der seriellen Adresse die kleinste Schrittweite, d. h. den einer Teilnehmerstation (T1 ... T32) zugeordneten Abschnitt der Busleitung (B), kennzeichnet (Figur 1) sowie

d4) die einzelnen Taktzeiten bei der Übertragung der Bits der jeweiligen Adresse so festgelegt sind, daß ausgehend von einer längsten Taktzeit für das höchstwertige Bit weitere Taktzeiten auf die halbe Länge der vorhergehenden Taktzeit gebracht werden.

## Claim

1. Method for the access control of subscriber stations of a decentralised data transmission apparatus to bus lines, in which method

a) the bus access of each subscriber station, which is concerned with taking over the master function, occurs via an associated address, with the highest value bit first, and

b) the subscriber stations can be connected to a common bus line, by means of which the signals are transmitted serially, characterised in that

c) all subscriber stations (T1 ... T32) are directly coupled to the common bus line (B), and in that

d) each subscriber station (T1 ... T32) having an address which depends on its local position participates in the access control and decision, wherein

d1) the binary states of the first bit of the serially coded address characterise a respective half length of the bus line (B) participating in the access decision as the largest step width and

d2) the respective consecutive bit is associated with the address of a step width on the bus line (B), this step width being halved in relation to the previous step width,

d3) the last bit of the serial address characterises the smallest step width, i.e. the section of the bus line (B) which is associated with a subscriber station (T1 ... T32) (Figure 1), and

d4) the individual clock times in the transmission of the bits to the respective address are determined in such a way that, commencing from a longest clock time for the highest value bit, further clock times are applied at half the length of the previous clock time.

## Revendication

1. Procédé pour la commande de l'accès de stations d'abonnés d'un système décentralisé de transmission de données à des infoducs, selon lequel

a) l'accès à l'infoduc de chaque station d'abonné chargée de reprendre la fonction pilote, s'effectue au moyen d'une adresse qui lui est coordonnée, avec le bit de poids fort en premier, et

b) les stations d'abonnés peuvent être connectées à un infoduc commun, par lequel des signaux sont transmis en série,
caractérisé en ce que

c) toutes les stations d'abonnés (T1... T32) sont couplées directement à l'infoduc commun (B) et que

d) chaque station d'abonné (T1 ... T32) participe à la commande et à la décision quant à l'accès par une adresse qui dépend de son emplacement géographique, selon une disposition dans laquelle

d1) les états binaires du premier bit de l'adresse codée en série caractérisent chaque fois une moitié de la longueur de l'infoduc (B) participant à la décision d'accès en tant que grandeur de pas maximale et

d2) chaque bit suivant de l'adresse est coordonné à une grandeur de pas, sur l'infoduc (B), qui est divisée par deux par rapport à la grandeur de pas précédente,

d3) le dernier bit de l'adresse sérielle caractérise la grandeur de pas minimale, c'est-à-dire le tronçon d'infoduc (B) coordonné à une station d'abonné (T1 ... T32) (figure 1) et

d4) les différentes périodes d'horloge, pour la transmission des bits de l'adresse, sont fixées de manière que, à partir d'une période d'horloge maximale pour le bit de poids fort, les périodes d'horloge consécutives soient ramenées à la moitié de la longueur de la période d'horloge précédente.

0 085 943

FIG 1

FIG 2